# EUROPEAN PATENT APPLICATION

(11) **EP 3 501 294 A1**
(43) Date of publication of application: **26.06.2019**
(21) Application number: 17843411.4
(22) Date of filing: 10.08.2017
(51) Int. Cl.: A23L 27/00, A23C 15/04, A23D 9/00, A23D 9/007, A23G 9/32, A23G 9/44, A23G 9/52, A23L 15/00, A23L 23/00

(54) **SWEETNESS AND/OR SALTINESS ENHANCING AGENT**

(30) Priority: 22.08.2016 JP 2016161597
(71) Applicant: J-Oil Mills, Inc., Tokyo 104-0044 (JP)
(72) Inventor: TSUJI Misaki, Tokyo 104-0044 (JP); TOKUCHI Takahiro, Tokyo 104-0044 (JP); INOUE Masahiro, Tokyo 104-0044 (JP)
(74) Representative: Mewburn Ellis LLP
(86) International application number: PCT/JP2017/029023
(87) International publication number: WO 2018/037926

(57) **Abstract**

Provided are a sweetness and/or saltiness enhancing agent and a method for enhancing sweetness and/or saltiness. This sweetness and/or saltiness enhancing agent includes, as an active ingredient, an oxidized oil or fat that has a peroxide value of 15 to 180 and contains 10 to 100 mass% of milk fat. This method for enhancing sweetness and/or saltiness of a food product is characterized by adding to a food product an oxidized oil or fat that has a peroxide value of 15 to 180 and contains 10 to 100 mass% of milk fat.

## Description

### TECHNICAL FIELD

The present invention relates to a sweetness and/or saltiness enhancing agent, a method for enhancing sweetness and/or saltiness, and a food product containing the enhancing agent.

### BACKGROUND ART

In recent years, the risk of diabetes has risen in accordance with changes in dietary habits. Therefore, people have increasingly turned to lower-calorie food products, and a reduction in the sugariness of food products has been desired. However, as sugariness is reduced, the sweetness of food products naturally diminishes, and the palatability of the food products may decrease. Patent document 1, for example, discloses a sweetness enhancing agent for a food/beverage product, the sweetness enhancing agent comprising a long-chain highly unsaturated fat and/or an ester thereof, and a method for enhancing sweetness. Adding the enhancing agent to a food product makes it possible to enhance the sweetness of food/beverage products.

In addition, it is said that a high salt intake can be a factor in heart disease. Therefore, the development of food products and seasoning agents having a reduced salt content has been promoted. Patent document 2, for example, discloses a method for manufacturing a food/beverage product having enhanced saltiness, the method being characterized in that prescribed quantities of arginine and/or a salt thereof, lactic acid and/or a salt thereof, and gluconic acid and/or a salt thereof are added to a raw ingredient.

### [Related Art Documents]

### [Patent Documents]

[Patent Document 1] Japanese Laid-Open Patent Application No. 2009-284859
[Patent Document 2] Japanese Laid-Open Patent Application No. 2013-208057

### DISCLOSURE OF THE INVENTION

### [Problems to Be Solved by the Invention]

It is an object of the present invention to provide a sweetness and/or saltiness enhancing agent, and a method for enhancing sweetness and/or saltiness. Another object of the present invention is to provide a food product of which the sweetness and/or saltiness is enhanced, the food product containing the enhancing agent.

### [Means to Solve the Problems]

As a result of thoroughgoing investigations, the inventors discovered that an oxidized oil or fat containing a prescribed quantity of milk fat yields an effect for enhancing the sweetness and/or saltiness of a food product, and thereby perfected the present invention.

### [Advantageous Effects of the Invention]

A food product containing the enhancing agent of the present invention has enhanced sweetness and/or saltiness. Therefore, if the enhancing agent of the present invention is used in the manufacture, processing, preparation, etc., of a food product, it is possible to reduce the quantity of sweeteners, etc., added to the food product while preserving the sweetness, etc., of the food product. In addition, the enhancing agent of the present invention not only has an effect for enhancing sweetness and/or saltiness but also can impart a milk flavor, and therefore the enhancing agent of the present invention is particularly suited to food products for which it is expected that a milk flavor will be imparted or enhanced in addition to sweetness and/or saltiness.

### BEST MODE FOR CARRYING OUT THE INVENTION

The present invention is a sweetness and/or saltiness enhancing agent that comprises, as an active ingredient, an oxidized oil or fat having a peroxide value of 15 to 180 and containing 10 to 100% by mass of milk fat. "Sweetness enhancement" refers to the enhancement of, e.g., the persistence of sweetness when a food product is consumed and the top intensity of the sweetness.

Furthermore, the enhancing agent preferably contains 0.001 to 50% by mass of the oxidized oil or fat.

In addition, the present invention is a method for manufacturing a sweetness and/or saltiness enhancing agent,
the method comprising a step for performing heating while supplying oxygen to a raw-ingredient oil or fat that contains 10 to 100% by mass of milk fat, and obtaining an oxidized oil or fat that has a peroxide value of 15 to 180.

Furthermore, the raw-ingredient oil or fat preferably contains 60 to 100% by mass of milk fat.

Furthermore, the heating preferably is performed at 65 to 150°C for 1 to 72 hours.

Furthermore, the supply of oxygen preferably is performed at a rate of 0.001 to 2 L/min per kilogram of the raw-ingredient oil or fat.

Furthermore, the milk fat preferably is anhydrous milk fat.

Furthermore, the method preferably comprises a step for adding the oxidized oil or fat to an edible oil or fat.

Furthermore, the manufacturing method preferably is configured such that the enhancing agent contains 0.001 to 50% by mass of the oxidized oil or fat.

In addition, the present invention is a food product that comprises the enhancing agent.

Furthermore, the food product preferably contains 0.005 to 10000 ppm of the oxidized oil or fat.

In addition, the present invention is a method for enhancing the sweetness and/or saltiness of a food product, the method being characterized in that an oxidized oil or fat having a peroxide value of 15 to 180 and containing 10 to 100% by mass of milk fat is added to a food product.

A discretionary combination of the configurations described above, a composition or method that includes said configurations, etc., can also be effective as an embodiment of the present invention. For example, according to the present invention, there is provided "a composition for enhancing sweetness and/or saltiness, the composition including an oxidized oil or fat that has a peroxide value of 15 to 180 and contains 10 to 100% by mass of milk fat."

The "milk fat" in the present invention refers to a substance that has a fat content of 95 to 100% by mass for a fat obtained from raw milk, cow milk, certified milk, etc. Examples of the milk fat include anhydrous milk fat and clarified butter. Anhydrous milk fat refers to a substance in which substantially all components other than milk fat have been removed from cow milk, etc., and may also be expressed as AMF, butter oil, etc. Clarified butter is a substance in which the fat component of butter has been fractionated. The milk fat used in the present invention preferably is anhydrous milk fat or clarified butter, and more preferably is anhydrous milk fat. In addition, the oil or fat content of the milk fat preferably is 98 to 100% by mass, and more preferably is 99 to 100% by mass.

The milk fat content of the oxidized oil or fat of the present invention is 10 to 100% by mass, preferably is 20 to 100% by mass, more preferably is 50 to 100% by mass, even more preferably is 60 to 100% by mass, still more preferably is 65 to 100% by mass, particularly preferably is 95 to 100% by mass, and most preferably is 100% by mass (i.e., milk fat alone) .

The oxidized oil or fat may contain an edible oil or fat other than milk fat. There is no particular limitation as to the edible oil or fat other than milk fat. One or more from among medium-chain fatty acid triglycerides, soybean oil, canola oil, corn oil, palm oil, and fractionated palm oil is preferred; one or more from among medium-chain fatty acid triglycerides, soybean oil, and canola oil is more preferred; and medium-chain fatty acid triglycerides and/or soybean oil is even more preferred. The oxidized oil or fat may contain an auxiliary agent, etc., that can be added to normal oils or fats, provided that the auxiliary agent does not inhibit the effect of the present invention.

In the present invention, the peroxide value (also referred to as "POV" below) of the oxidized oil or fat is 15 to 180, preferably is 20 to 150, more preferably is 30 to 140, even more preferably is 45 to 140, and particularly preferably is 60 to 140. The POV can be measured in conformance with, e.g., "Standard methods for the analysis of fats, oils and related materials: 2.5.2 Peroxide value" (Japan Oil Chemists' Society). Performing oxidization makes it possible to set the POV of the oxidized oil or fat within a prescribed range, although there is no particular limitation as to the method for oxidation. When performing oxidation, it is preferable to perform heating as well. The temperature for heating preferably is 65 to 150°C, more preferably is 70 to 140°C, and even more preferably is 75 to 140°C. There is no particular limitation as to the length of time for performing oxidation; 1 to 72 hours is preferred, 3 to 72 hours is more preferred, and 5 to 72 hours is even more preferred.

In addition, when performing oxidation, it is preferable to supply oxygen to a raw-ingredient oil or fat to perform oxidation. It does not matter if the oxygen supply source is oxygen alone; the supply source may include oxygen from air, etc., and preferably is air. The oxygen supply quantity preferably is 0.001 to 2 L/min per kilogram of the raw-ingredient oil or fat, more preferably is 0.005 to 2 L/min, and even more preferably is 0.02 to 2 L/min. In the case of air, for example, the supply quantity preferably is 0.005 to 10 L/min per kilogram of the raw-ingredient oil or fat, more preferably is 0.025 to 10 L/min, even more preferably is 0.1 to 10 L/min, and still more preferably is 0.3 to 5 L/min. It is preferable to stir the raw-ingredient oil or fat when performing oxidation.

The milk fat content of the raw-ingredient oil or fat is 10 to 100% by mass, preferably is 20 to 100% by mass, more preferably is 50-100% by mass, even more preferably is 60-100% by mass, still more preferably is 65 to 100% by mass, particularly preferably is 95 to 100% by mass, and most preferably is 100% by mass (i.e., milk fat alone).

The raw-ingredient oil or fat may contain an edible oil or fat other than milk fat. There is no particular limitation as to the edible oil or fat other than milk fat. One or more from among medium-chain fatty acid triglycerides, soybean oil, canola oil, corn oil, palm oil, and fractionated palm oil is preferred; one or more from among medium-chain fatty acid triglycerides, soybean oil, and canola oil is more preferred; and medium-chain fatty acid triglycerides and/or soybean oil is even more preferred. The water content of the raw-ingredient oil or fat is, e.g., less than 1% by mass.

The enhancing agent of the present invention is a substance for enhancing the sweetness and/or saltiness of a food product through the function effect of the oxidized oil or fat that the food product is caused to contain. Accordingly, the enhancing agent of the present invention is to be applied to food products that are sweet and/or salty. Alternatively, in some circumstances, the enhancing agent of the present invention may be used in order to impart or enhance a milk flavor in the food product in addition to enhancing sweetness and/or saltiness. The method of addition does not particularly matter. The enhancing agent may be added to a raw ingredient of the food product, to an intermediate of a manufacturing step, etc. Examples of food products and food product intermediates include prepared powders (deep-fry powders, cake mix, pancake mix, doughnut mix, etc.), roux (curry, stew, hash, etc.), instant-cook food/beverage products (instant noodles, instant soup, instant miso soup, instant cocoa, instant nondairy creamer, powdered milk, etc.), retort food products (curry, stew, pasta sauce, soup, etc.), refrigerated or frozen food products (doughnuts, French fries, deep-fried foods, croquettes, fried minced-meat cakes, breaded pork cutlets, gratin, pizza, fried rice, pilaf, meat buns, pot stickers, etc.), processed meat products (ham, bacon, sausage, hamburger, roast pork, flavored meats, etc.), processed marine products (fish sausage, seasoned fish paste, seasoned cod roe, tuna minced with Welsh onion leaves, salted fermented seafood, shrimp paste, etc.), condiments (miso, sauces, tomato sauce, seasoning sauces, flavored oils, Chinese cuisine base, chicken broth base, bouillon, stew broth, etc.), confectionery and baked goods (potato chips, chocolate, cookies, cakes, pies, biscuits, crackers, gummies, caramel, candies, bread, Danishes, etc.), confectionery ingredients (chocolate spread, chocolate coating agents, annin tofu base, pudding base, jelly base, etc.), dairy products and dairy substitute products (milk beverages, butter, cream, whipped cream, margarine, etc.), and frozen desserts (ice cream, iced milk, lacto ice, sherbet, jelly, pudding, annin tofu, etc.).

The enhancing agent content of a food product to which the present invention is applied may be adjusted in accordance with the effect thereof; for example, the food product preferably contains 0.005 to 10000 ppm of the oxidized oil or fat, more preferably contains 0.01 to 7000 ppm, even more preferably contains 0.05 to 5000 ppm, still more preferably contains 0.08 to 3000 ppm, and particularly preferably contains 0.08 to 2000 ppm.

In the enhancing agent of the present invention, the oxidized oil or fat content may be adjusted in accordance with the usage state or the desired effect thereof, and there is no particular limitation thereon; for example, the oxidized oil or fat content preferably is 0.001 to 50% by mass, more preferably is 0.001 to 30% by mass, and even more preferably is 0.01 to 30% by mass.

An edible oil or fat for diluting the oxidized oil or fat may be used in the enhancing agent of the present invention. There is no particular limitation as to the edible oil or fat; examples include: palm kernel oil, palm oil, coconut oil, corn oil, cottonseed oil, soybean oil, canola oil, rice-bran oil, sunflower oil, safflower oil, cacao oil, and other such vegetable oils and fats; lard and other such animal oils and fats; and medium-chain fatty acid triglycerides, etc. In addition, fractionated oils (medium-melting-point portion of palm oil, fractionated soft oils of palm oil, fractionated hard oils of palm oil, etc.), ester exchange oils, hydrogenated oils, and other such processed oils of these edible oils or fats can be used. One or more of these edible oils or fats can be used. In addition, an auxiliary agent, etc., that can be added to normal oils or fats can be used in the enhancing agent, provided that the auxiliary agent does not inhibit the effect of the present invention.

### EXAMPLES

Examples of the present invention are described below, but the scope of the present invention is not limited thereto.

The following substances (all of which have a water content of less than 1% by mass) were used when implementing the examples.
Anhydrous milk fat (trade name: Butter Oil CML, manufactured by Maruwayushi Co., Ltd., oil or fat content: 99.8% by mass)
Soybean oil (manufactured by J-Oil Mills, Inc.)
Canola oil (manufactured by J-Oil Mills, Inc.)
Medium-chain fatty acid triglyceride (MCT) (trade name: MCT Actor M-107FR, manufactured by Riken Vitamin Co., Ltd.)
High-oleic-acid low-linolenic-acid canola oil (HOLL canola oil) (manufactured by J-Oil Mills, Inc.)
Shortening (melting point: 27.5°C)

Oxidized oils or fats were prepared as described below.

### (Preparation examples 1 to 5)

200 g of anhydrous milk fat was charged into a stainless steel beaker, and the anhydrous milk fat was stirred and air (200 mL/min) was supplied thereto while the anhydrous milk fat was kept at a temperature of 100°C. A sample was taken after 4.5, 5, 5.5, 5.8, or 6.5 hours, and an oxidized oil or fat was obtained.

The peroxide value (POV) of the resulting oxidized oil or fat was measured in conformance with "Standard methods for the analysis of fats, oils and related materials: 2.5.2 Peroxide value" (Japan Oil Chemists' Society). The results are shown in table 1.

**(Table 1)**

| | Preparation example 1 | Preparation example 2 | Preparation example 3 | Preparation example 4 | Preparation example 5 |
|---|---|---|---|---|---|
| Held temperature (°C) | 100 | 100 | 100 | 100 | 100 |
| Holding time (hours) | 4.5 | 5 | 5.5 | 5.8 | 6.5 |
| POV | 11 | 34 | 51 | 83 | 120 |

### (Preparation examples 6 to 10)

10 parts by mass of the oxidized oil or fat in one of preparation examples 1 to 5 and 90 parts by mass of shortening were mixed (preparation examples 6 to 10).

### (Preparation examples 11 to 14)

1 part by mass of the oxidized oil or fat in one of preparation examples 2-5 and 99 parts by mass of canola oil were mixed (preparation examples 11 to 14).

### (Preparation example 15)

0.01 part by mass of the oxidized oil or fat in preparation example 3 and 99.99 parts by mass of shortening were mixed.

### (Preparation example 16)

0.1 part by mass of the oxidized oil or fat in preparation example 3 and 99.9 parts by mass of shortening were mixed.

### (Preparation example 17)

1 part by mass of the oxidized oil or fat in preparation example 3 and 99 parts by mass of shortening were mixed.

### (Preparation example 18)

200 g of anhydrous milk fat was charged into a stainless steel beaker, and the anhydrous milk fat was stirred and air (200 mL/min) was supplied thereto while the anhydrous milk fat was kept at a temperature of 100°C. A reaction was carried out for 5.6 hours, and an oxidized oil or fat having a POV of 63 was obtained.

### (Preparation example 19)

10 parts by mass of the oxidized oil or fat in preparation example 18 and 90 parts by mass of shortening were mixed.

### (Preparation example 20)

0.01 part by mass of the oxidized oil or fat in preparation example 3 and 99.99 parts by mass of canola oil were mixed.

### (Preparation example 21)

0.1 part by mass of the oxidized oil or fat in preparation example 3 and 99.9 parts by mass of canola oil were mixed.

### (Preparation example 22)

10 parts by mass of the oxidized oil or fat in preparation example 3 and 90 parts by mass of canola oil were mixed.

### (Preparation example 23)

45 parts by mass of palm kernel hard oil, 63.36 parts by mass of corn syrup (water content: 25% by mass), 2.10 parts by mass of a pH adjusting agent mix (dipotassium hydrogen phosphate, trisodium citrate), and 5.38 parts by mass of an emulsifier mix (a mixture of acid casein, sodium hydroxide, sorbitan fatty acid ester, and glycerin fatty acid ester) were combined and mixed. 84.16 parts by mass of water was furthermore added, the mixture was emulsified and sprayed in accordance with conventional methods, and a powdered oil was obtained.

### (Preparation example 24)

44 parts by mass of palm kernel hard oil, 1 part by mass of the oxidized oil or fat in preparation example 3, 63.36 parts by mass of corn syrup (water content: 25% by mass), 2.10 parts by mass of a pH adjusting agent mix (dipotassium hydrogen phosphate, trisodium citrate), and 5.38 parts by mass of an emulsifier mix (a mixture of acid casein, sodium hydroxide, sorbitan fatty acid ester, and glycerin fatty acid ester) were combined and mixed. 84.16 parts by mass of water was furthermore added, the mixture was emulsified and sprayed in accordance with conventional methods, and a powdered oil (containing 1% by mass of the oxidized oil or fat in preparation example 3) was obtained.

### (Preparation example 25, oxidized oil or fat containing milk fat and edible oil or fat other than milk fat)

60 g of a medium-chain fatty acid triglyceride (MCT) was mixed into 140 g of anhydrous milk fat, and an oil or fat containing 70% by mass of milk fat was prepared. 200 g of the prepared oil or fat was charged into a stainless steel beaker, and the oil or fat was stirred and air (200 mL/min) was supplied thereto while the oil or fat was kept at a temperature of 120°C. A reaction was carried out for 13 hours, and an oxidized oil or fat having a POV of 58.7 was obtained.

### (Preparation example 26, oxidized oil or fat containing milk fat and edible oil or fat other than milk fat)

The same process as in preparation example 25 was performed, except that soybean oil was used instead of the medium-chain fatty acid triglyceride (MCT), and an oxidized oil or fat having a POV of 44.6 was obtained.

### (Preparation example 27, oxidized oil or fat containing milk fat and edible oil or fat other than milk fat)

50 parts by mass of HOLL canola oil was mixed into 50 parts by mass of anhydrous milk fat, and an oil or fat containing 50% by mass of milk fat was prepared. 200 g of the prepared oil or fat was charged into a stainless steel beaker, and the oil or fat was stirred and air (200 mL/min) was supplied thereto while the oil or fat was kept at a temperature of 100°C. A reaction was carried out for 36 hours, and an oxidized oil or fat having a POV of 100 was obtained.

### (Preparation example 28, oxidized oil or fat containing milk fat and edible oil or fat other than milk fat)

80 parts by mass of HOLL canola oil was mixed into 20 parts by mass of anhydrous milk fat, and an oil or fat containing 20% by mass of milk fat was prepared. 200 g of the prepared oil or fat was charged into a stainless steel beaker, and the oil or fat was stirred and air (200 mL/min) was supplied thereto while the oil or fat was kept at a temperature of 100°C. A reaction was carried out for 30 hours, and an oxidized oil or fat having a POV of 105 was obtained.

### (Preparation examples 29 to 32)

10 parts by mass of the oxidized oil or fat in one of preparation examples 25 to 28 and 90 parts by mass of shortening were mixed (preparation examples 29 to 32).

### (Preparation example 33)

35 parts by mass of palm kernel hard oil, 10 parts by mass of the oxidized oil or fat in preparation example 3, 63.33 parts by mass of corn syrup (water content: 25% by mass), 2.1 parts by mass of a pH adjusting agent (dipotassium hydrogen phosphate, trisodium citrate), and 5.4 parts by mass of an emulsifier mix (a mixture of acid casein, sodium hydroxide, sorbitan fatty acid ester, and glycerin fatty acid ester) were combined and mixed. 84.17 parts by mass of water was furthermore added, the mixture was emulsified and sprayed in accordance with conventional methods, and a powdered oil containing 10% by mass of the oxidized oil or fat was obtained.

### (Preparation examples 34 and 35)

0.1 parts by mass of the oxidized oil or fat in preparation example 27 or preparation example 28 and 99.9 parts by mass of canola oil were mixed (preparation examples 34 and 35).

### (Preparation example 36)

1 part by mass of the oxidized oil or fat in preparation example 3 and 99 parts by mass of a medium-chain fatty acid triglyceride (MCT) were mixed (preparation example 36).

### (Ice cream evaluation 1)

Commercially available lacto ice (trade name: Meiji Essel Super Cup Vanilla, manufactured by Meiji Co., Ltd., Brix: 37.3%) was melted at room temperature to allow removal from a cup. A sample of the lacto ice was introduced into a beaker and liquefied at 50 to 60°C. Shortening and the oil or fat compositions in preparation examples 6 to 10 were similarly liquefied. 0.1 part by mass of the shortening (control) or the oil or fat composition in one of preparation examples 6 to 10 was added to 100 parts by mass of the liquefied lacto ice, and the ingredients were stirred for five minutes at 10000 rpm using a disperser and cooled by ice water. The resulting lacto ice was consumed, and the persistence of sweetness and the top intensity (intensity of sweetness first tasted upon consumption) of the sweetness were evaluated as follows. The results are shown in table 2.

### <Persistence of sweetness>

- ⊚:: Much greater than control
- ○:: Greater than control
- Δ:: Somewhat greater than control
- ×:: Same as or less than control

### <Top intensity>

- ⊚:: Much stronger than control
- ○:: Stronger than control
- Δ:: Somewhat stronger than control
- ×:: Same as control

**(Table 2)**

| | Control | Comparative example 2-1 | Example 2-1 | Example 2-2 | Example 2-3 | Example 2-4 |
|---|---|---|---|---|---|---|
| Oil or fat composition (oxidized oil or fat) | Shortening | Preparation example 6 (preparation example 1) | Preparation example 7 (preparation example 2) | Preparation example 8 (preparation example 3) | Preparation example 9 (preparation example 4) | Preparation example 10 (preparation example 5) |
| POV of oxidized oil or fat | - | 11 | 34 | 51 | 83 | 120 |
| Oxidized oil or fat content (mass%) | - | 10 | 10 | 10 | 10 | 10 |
| Persistence of sweetness | - | × | ○ | ⊚ | ⊚ | ⊚ |
| Top intensity | - | × | × | × | ○ | ⊚ |

As shown in comparative example 2-1, the POV of the oxidized oil or fat was 11, and neither the top intensity nor the persistence of the sweetness was enhanced. However, as shown in examples 2-1 through 2-4, the POV of the oxidized oil or fat was 34 or greater, and an effect for enhancing the persistence of sweetness was obtained; it was apparent that the effect increases commensurately with increases in the POV. In addition, it was apparent that at a POV of 83 or greater, the top intensity of the sweetness is also enhanced.

### (Ice cream evaluation 2)

The same operation as for ice cream evaluation 1 was performed, except that the oil or fat composition in preparation example 19 was used instead of the oil or fat composition in preparation example 6, and lacto ice was obtained. The resulting lacto ice was consumed, and the persistence of sweetness and the milk flavor were evaluated as follows. The results are shown in table 3.

### <Persistence of sweetness>

- ⊚:: Much greater than control
- ○:: Greater than control
- Δ:: Somewhat greater than control
- ×:: Same as or less than control

### <Milk flavor>

- ⊚:: Much stronger than control
- ○:: Stronger than control
- Δ:: Somewhat stronger than control
- ×:: Same as or weaker than control

**(Table 3)**

| | Control | Example 3-1 |
|---|---|---|
| Oil or fat composition (oxidized oil or fat) | Shortening | Preparation example 19 (preparation example 18) |
| POV of oxidized oil or fat | - | 63 |
| Oxidized oil or fat content (mass%) | - | 10 |
| Persistence of sweetness | - | ⊚ |
| Milk flavor | - | ⊚ |

As shown in example 3-1, adding the oil or fat composition in preparation example 19, which contained an oxidized oil or fat having a POV of 63, enhanced the persistence of sweetness and furthermore also enhanced the milk flavor.

### (Ice cream evaluation 3)

The same operation as for ice cream evaluation 1 was performed, except that the oil or fat composition in one of preparation examples 15 to 17 or the oil or fat composition in preparation example 8 was used instead of the oil or fat composition in preparation example 6, and lacto ice was obtained. The resulting lacto ice was consumed, and the persistence of sweetness was evaluated as follows. The results are shown in table 4.

### <Persistence of sweetness>

- ⊚:: Much greater than control
- ○:: Greater than control
- Δ:: Somewhat greater than control
- ×:: Same as or weaker than control

**(Table 4)**

| | Control | Example 4-1 | Example 4-2 | Example 4-3 | Example 4-4 |
|---|---|---|---|---|---|
| Oil or fat composition (oxidized oil or fat) | Shortening | Preparation example 15 (preparation example 3) | Preparation example 16 (preparation example 3) | Preparation example 17 (preparation example 3) | Preparation example 8 (preparation example 3) |
| POV of oxidized oil or fat | - | 51 | 51 | 51 | 51 |
| Oxidized oil or fat content (mass%) | - | 0.01 | 0.1 | 1 | 10 |
| Persistence of sweetness | - | Δ | ○ | ○ | ⊚ |

In the oil or fat composition in preparation example 15, which contained 0.01% by mass of the oxidized oil or fat, it was possible to recognize an effect for enhancing sweetness. The effect for enhancing sweetness increased commensurately with increases in the oxidized oil or fat content.

### (Ice cream evaluation 4)

Commercially available lacto ice (same as above) was melted at room temperature to allow removal from a cup. A sample of the lacto ice was introduce into a beaker and stirred for ten minutes at 60°C. 3 parts by mass of the oil or fat composition in preparation example 23 (control: a powdered oil not containing the oxidized oil or fat in preparation example 3) or the oil or fat composition in preparation example 24 (a powdered oil containing 1% by mass of the oxidized oil or fat in preparation example 3) was added to 97 parts by mass of the lacto ice, and the ingredients were stirred for six minutes at 10000 rpm using a disperser. After being cooled by ice water, the ingredients were stirred for three hours at -18°C using an ice cream maker. The resulting lacto ice was charged into a container and cooled overnight at -18°C. Then, once the lacto ice was consumed, it was found that the lacto ice containing the oil or fat composition in preparation example 24 had stronger sweetness than that containing the oil or fat composition in preparation example 23 (the control).

### (Soup evaluation 1)

54.3 g of a potage soup powder (trade name: Knorr Cup Soup Potage Soup, manufactured by Knorr Foods Co., Ltd.) from which croutons had been removed and 450 g of hot water at 90°C were charged into a beaker and mixed, and a soup (salt content: 7.2 mg/g) was obtained. 100 g of the soup was charged into a cup, 0.1 g of canola oil (control) or the oil or fat composition in preparation example 20, preparation example 21, or preparation example 22 was added, the ingredients were stirred, and a test soup was obtained. The test soup was consumed, and the saltiness was evaluated as follows. The results are shown in table 5.

### <Saltiness>

- ⊚:: Much stronger than control
- ○:: Stronger than control
- Δ:: Somewhat stronger than control
- ×:: Same as or weaker than control

**(Table 5)**

| | Control | Example 5-1 | Example 5-2 | Example 5-3 |
|---|---|---|---|---|
| Oil or fat composition (oxidized oil or fat) | Canola oil | Preparation example 20 (preparation example 3) | Preparation example 21 (preparation example 3) | Preparation example 22 (preparation example 3) |
| POV of oxidized oil or fat | - | 51 | 51 | 51 |
| Oxidized oil or fat content (mass%) | - | 0.01 | 0.1 | 10 |
| Saltiness | - | Δ | ○ | ⊚ |

In the oil or fat composition in preparation example 20, which contained 0.01% by mass of the oxidized oil or fat, it was possible to recognize an effect for enhancing saltiness. The effect for enhancing saltiness increased commensurately with increases in the oxidized oil or fat content.

### (Soup evaluation 2)

The same operation as for soup evaluation 1 was performed, except that the oil or fat composition in one of preparation examples 11 to 14 was used instead of the oil or fat composition in preparation example 20, and a test soup was obtained. The test soup was consumed, and the saltiness was evaluated in the same manner. The results are shown in table 6.

**(Table 6)**

| | Control | Example 6-1 | Example 6-2 | Example 6-3 | Example 6-4 |
|---|---|---|---|---|---|
| Oil or fat composition (oxidized oil or fat) | Canola oil | Preparation example 11 (preparation example 2) | Preparation example 12 (preparation example 3) | Preparation example 13 (preparation example 4) | Preparation example 14 (preparation example 5) |
| POV of oxidized oil or fat | - | 34 | 51 | 83 | 120 |
| Oxidized oil or fat content (mass%) | - | 1 | 1 | 1 | 1 |
| Saltiness | - | Δ | ⊚ | ⊚ | ⊚ |

As shown in table 6, it was possible to recognize an effect for enhancing saltiness when the POV of the oxidized oil or fat was 34 or greater. The effect increased commensurately with increases in the POV of the oxidized oil or fat.

### (Soup evaluation 3)

The same operation as for soup evaluation 1 was performed, except that the oil or fat composition in preparation example 23 (control: a powdered oil not containing the oxidized oil or fat in preparation example 3) or the oil or fat composition in preparation example 24 (a powdered oil containing 1% by mass of the oxidized oil or fat in preparation example 3) was used instead of the oil or fat composition in preparation example 20, and a test soup was obtained. The test soup was consumed, and the saltiness was evaluated in the same manner. The results are shown in table 7.

**(Table 7)**

| | Control | Comparative example 7-1 | Example 7-1 |
|---|---|---|---|
| Oil or fat composition (oxidized oil or fat) | Canola oil | Preparation example 23 (-) | Preparation example 24 (preparation example 3) |
| POV of oxidized oil or fat | - | - | 51 |
| Oxidized oil or fat content (mass%) | - | 0 | 1 |
| Saltiness | - | × | ○ |

As shown in example 7-1, it was apparent that even when the enhancing agent was in the form of a powdered oil, it was possible to enhance saltiness in the same manner as when the enhancing agent was in the form of a liquid oil. In addition, as shown in comparative example 7-1, no effect for enhancing saltiness was exhibited by the powdered oil not containing the oxidized oil or fat.

### (Soup evaluation 4)

The same operation as for soup evaluation 1 was performed, except that a corn soup powder (trade name: Knorr Cup Soup Creamed Corn, manufactured by Knorr Foods Co., Ltd.) was used instead of the potage soup powder, and the saltiness was evaluated in the same manner for canola oil (control), the oil or fat composition in preparation example 21, or the oil or fat composition in preparation example 22. The results are shown in table 8.

**(Table 8)**

| | Control | Example 8-1 | Example 8-2 |
|---|---|---|---|
| Oil or fat composition (oxidized oil or fat) | Canola oil | Preparation example 21 (preparation example 3) | Preparation example 22 (preparation example 3) |
| POV of oxidized oil or fat | - | 51 | 51 |
| Oxidized oil or fat content (mass%) | - | 0.1 | 10 |
| Saltiness | - | ○ | ⊚ |

It was possible to recognize an effect for enhancing saltiness in the same manner for the corn soup as well.

### (Cream evaluation)

10 g of granulated sugar and 0.1 g of canola oil (control) or the oil or fat composition in preparation example 22 were added to 100 g of nondairy cream (trade name: Natural Whip VF35, manufactured by Omu Milk Products Co., Ltd., milk fat content: 0%, vegetable oil or fat content: 35%). The ingredients were stirred for 21 minutes using a hand mixer. The resulting cream was consumed, and the sweetness and milk flavor were evaluated as follows.

In addition, 10 g of granulated sugar and 0.1 g of canola oil were added to 100 g of fresh cream (trade name: Pure Cream 35, manufactured by Omu Milk Products Co., Ltd., milk fat content: 35%, vegetable oil or fat content: 0%). The ingredients were stirred for 13 minutes using a hand mixer. The resulting cream was consumed and evaluated in the same manner. The results are shown in table 9.

### <Sweetness>

- ⊚:: Much improved
- ○:: Improved
- Δ:: Somewhat improved
- ×:: Poor

### <Milk flavor>

- ⊚:: Very strong
- ○:: Strong
- Δ:: Somewhat strong
- ×:: Weak

**(Table 9)**

| | Control | Example 9-1 | Reference example |
|---|---|---|---|
| Cream | Nondairy cream | Nondairy cream | Fresh cream |
| Oil or fat composition (oxidized oil or fat) | Canola oil | Preparation example 22 (preparation example 3) | Canola oil |
| POV of oxidized oil or fat | - | 51 | - |
| Oxidized oil or fat content (mass%) | - | 10 | - |
| Sweetness | ○ | ⊚ | ⊚ |
| Milk flavor | × | ⊚ | ⊚ |

As shown in example 9-1, adding the oil or fat composition in preparation example 22, which contained an oxidized oil or fat having a POV of 51, enhanced the sweetness to a greater extent than in the control and furthermore also enhanced the milk flavor.

Moreover, even for a nondairy cream that contains no milk fat, adding the oil or fat composition in preparation example 22, which contained an oxidized oil or fat having a POV of 51, made it possible to achieve a cream having equally sweetness and milk flavor to a cream containing 35% milk fat.

### (Omelet evaluation)

200 g of egg, 40 g of cow milk, and 0.8 g of table salt were mixed, and an egg mixture was obtained. 0.1 g of canola oil (control) or the oil or fat composition in preparation example 22 was added to 100 g of the resulting egg mixture, and the ingredients were stirred. 5 g of canola oil and 2 g of butter (trade name: Yukijirushi Hokkaido Butter, precut to 10 g, manufactured by Megmilk Snow Brand Co., Ltd.) were added to a heated fry pan and blended in the fry pan. The egg mixture was cooked over low heat while being stirred. The resulting omelet (salt content: 3.3 mg/g) was consumed, and the saltiness and milk flavor were evaluated as follows. The results are shown in table 10.

### <Saltiness>

- ⊚:: Much improved
- ○:: Improved
- Δ:: Somewhat improved
- ×:: Poor

### <Milk flavor>

- ⊚:: Very strong
- ○:: Strong
- Δ:: Somewhat strong
- ×:: Weak

**(Table 10)**

| | Control | Example 10-1 |
|---|---|---|
| Oil or fat composition (oxidized oil or fat) | Canola oil | Preparation example 22 (preparation example 3) |
| POV of oxidized oil or fat | - | 51 |
| Oxidized oil or fat content (mass%) | - | 10 |
| Saltiness | Δ | ⊚ |
| Milk flavor | Δ | ○ |

As shown in example 10-1, when the oil or fat composition in preparation example 22, which contained an oxidized oil or fat having a POV of 51, was added, the saltiness of the omelet was enhanced to a greater extent than in the control, and furthermore enhancement of the milk flavor was also recognized.

### (Ice cream evaluation 5)

The same operation as for ice cream evaluation 1 was performed, except that the oil or fat composition in preparation example 8 or the oil or fat composition in one of preparation examples 29 to 32 was used instead of the oil or fat composition in preparation example 6, and lacto ice was obtained. The resulting lacto ice was consumed, and the persistence of sweetness was evaluated as follows. The results are shown in table 11.

### <Persistence of sweetness>

- ⊚:: Much greater than control
- ○:: Greater than control
- Δ:: Somewhat greater than control
- ×:: Same as or less than control

**(Table 11)**

| | Control | Example 11-1 | Example 11-2 | Example 11-3 | Example 11-4 | Example 11-5 |
|---|---|---|---|---|---|---|
| Oil or fat composition (oxidized oil or fat) | Shortening | Preparation example 8 (preparation example 3) | Preparation example 29 (preparation example 25) | Preparation example 30 (preparation example 26) | Preparation example 31 (preparation example 27) | Preparation example 32 (preparation example 28) |
| POV of oxidized oil or fat | - | 51 | 58.7 | 44.6 | 100 | 105 |
| Milk fat content of oxidized oil or fat (mass%) | - | 100 | 70 | 70 | 50 | 20 |
| Oxidized oil or fat content (mass%) | - | 10 | 10 | 10 | 10 | 10 |
| Persistence of sweetness | - | ⊚ | ⊚ | ○ | Δ | Δ |

It was apparent that all of the oxidized oil or fats containing 20% by mass or more of milk fat yielded an effect for enhancing sweetness. In particular, the effect for enhancing sweetness was high at a milk fat content of 70% by mass or higher.

### (Pancake evaluation)

100 g of a commercially available pancake mix (trade name: Minasama no Osumitsuki Pancake Mix, manufactured by Seiyu G.K.), 70 mL of cow milk, and 30 g of egg were mixed together, 2 g of the oil or fat composition in preparation example 33 (a powdered oil containing 10% by mass of the oxidized oil or fat in preparation example 3) was then added, and the ingredients were subsequently mixed. After being cooked using a rice cooker, the resulting pancakes were consumed, and an effect for enhancing sweetness was evaluated in relation to a control comprising pancakes to which the oil or fat composition in preparation example 33 was not added.

According to the results, in the pancakes to which the oil or fat composition in preparation example 33 (a powdered oil containing 10% by mass of the oxidized oil or fat in preparation example 3) was added, the sweetness was enhanced to a much greater extent than in the control. In addition, it was apparent that even when the enhancing agent was in the form of a powdered oil, an enhancing effect was obtained in the same manner as when the enhancing agent was in the form of a liquid oil.

### (French fry evaluation)

Frozen French fries (trade name: Shoestring French Fries, manufactured by Ajinomoto Frozen Food Co., Ltd.) were cooked in 180°C canola oil, and French fries were prepared. 2 parts by mass of canola oil (control), the oil or fat composition in preparation example 34 (obtained by mixing 0.1 parts by mass of the oxidized oil or fat in preparation example 27 and 99.9 parts by mass of canola oil), or the oil or fat composition in preparation example 35 (obtained by mixing 0.1 parts by mass of the oxidized oil or fat in preparation example 28 and 99.9 parts by mass of canola oil) was added to 100 parts by mass of the French fries, and the French fries were thoroughly coated. Furthermore, once the French fries were consumed after the same quantity of table salt was added, it was found that the saltiness was stronger in preparation example 34 and preparation example 35 than in the control.

### (Low-fat milk evaluation)

0.1 g of a medium-chain fatty acid triglyceride (MCT) (control) or the oil or fat composition in preparation example 36 (obtained by mixing 1 part by mass of the oxidized oil or fat in preparation example 3 and 99 parts by mass of MCT) was added to 100 g of commercially available low-fat milk (manufactured by Aeon Topvalu Co., Ltd., Brix: 8.9%), and the ingredients were stirred for five minutes at 10000 rpm using a disperser. Once the resulting low-fat milk was consumed, it was found that the sweetness of the low-fat milk to which the oil or fat composition in preparation example 36 was added was enhanced to a greater extent than in the control.

## Claims

1. A sweetness and/or saltiness enhancing agent that comprises, as an active ingredient, an oxidized oil or fatoxidized oil or fat having a peroxide value of 15 to 180 and containing 10 to 100% by mass of milk fat.

2. The enhancing agent of claim 1, wherein the enhancing agent contains 0.001 to 50% by mass of the oxidized oil or fat.

3. A method for manufacturing a sweetness and/or saltiness enhancing agent,
the method comprising a step for performing heating while supplying oxygen to a raw-ingredient oil or fat that contains 10 to 100% by mass of milk fat, and obtaining an oxidized oil or fat that has a peroxide value of 15 to 180.

4. The manufacturing method of claim 3, wherein the raw-ingredient oil or fat contains 60 to 100% by mass of milk fat.

5. The manufacturing method of claim 3 or 4, wherein the heating is performed at 65 to 150°C for 1 to 72 hours.

6. The manufacturing method of any of claims 3 to 5, wherein the supply of oxygen is performed at a rate of 0.001 to 2 L/min per kilogram of the raw-ingredient oil or fat.

7. The manufacturing method of any of claims 3 to 6, wherein the milk fat is anhydrous milk fat.

8. The manufacturing method of any of claims 3 to 7, wherein the method comprises a step for adding the oxidized oil or fat to an edible oil or fat.

9. The manufacturing method of claim 8, wherein the manufacturing method is configured such that the enhancing agent contains 0.001 to 50% by mass of the oxidized oil or fat.

10. A food product that comprises the enhancing agent of claim 1 or 2.

11. The food product of claim 10, wherein the food product contains 0.005 to 10000 ppm of the oxidized oil or fat.

12. A method for enhancing the sweetness and/or saltiness of a food product, the method being **characterized in that** an oxidized oil or fat having a peroxide value of 15 to 180 and containing 10 to 100% by mass of milk fat is added to a food product.
